# EUROPÄISCHE PATENTANMELDUNG

(11) **EP 4 674 647 A1**
(43) Veröffentlichungstag der Anmeldung: **07.01.2026**
(21) Anmeldenummer: 25183714.2
(22) Anmeldetag: 18.06.2025
(51) Int. Cl.: B60C 29/00, B60C 29/02, B60C 29/06

(54) **FAHRRADVENTIL, FAHRRADFELGE UND VERFAHREN ZUM AUFPUMPEN EINES LUFTREIFENS EINES FAHRRADS**

(30) Priorität: 01.07.2024 DE 102024118598
(71) Anmelder: AIGO-TEC GmbH, 89537 Giengen (DE)
(72) Erfinder: Ströbele, Christoph, 89428 Syrgenstein (DE)
(74) Vertreter: Dr. Weitzel & Partner

(57) **Zusammenfassung**

Die Erfindung betrifft Fahrradventil mit einem Ventilschaft, einem im Ventilschaft angeordneten Rückschlagventil und einer Ventilmutter, wobei der Ventilschaft einen ersten Abschnitt mit einem Luftauslassende und mit einem Außengewinde umfasst und einen an den ersten Abschnitt angrenzenden zweiten Abschnitt mit einem Lufteinlassende und einem gegenüber dem ersten Abschnitt reduzierten Außendurchmesser aufweist; der Ventilschaft am Luftauslassende ein Konterelement mit einem gegenüber dem ersten Abschnitt vergrößerten Konteraußendurchmesser aufweist oder trägt; die Ventilmutter einen Gewindeabschnitt mit einem auf das Außengewinde des ersten Abschnitts des Ventilschafts geschraubten Innengewinde aufweist, wobei die Ventilmutter durch Festschrauben und Losschrauben auf dem Außengewinde zwischen einer dem Lufteinlassende vergleichsweise fernen ersten Spannposition und einer dem Lufteinlassende vergleichsweise nahen zweiten Adapterposition drehverschiebbar ist; die Ventilmutter benachbart zum Gewindeabschnitt endseitig eine zum Luftauslassende gewandte Spannstirnfläche aufweist, deren Abstand zum Konterelement durch Verbringen der Ventilmutter aus der zweiten Adapterposition in die erste Spannposition reduzierbar ist, um eine Fahrradfelge in der ersten Spannposition der Ventilmutter wischen der Spannstirnfläche und dem Konterelement einzuklemmen.

Das erfindungsgemäße Fahrradventil ist dadurch gekennzeichnet, dass die Ventilmutter einen sich unmittelbar oder mittelbar an den Gewindeabschnitt anschließenden Adapterabschnitt umfasst, der eine radial äußere Oberfläche zum Aufsetzen eines Pumpenkopfes für Autoventile in der zweiten Adapterposition der Ventilmutter aufweist.

## Beschreibung

Die vorliegende Erfindung betrifft ein Fahrradventil gemäß dem Oberbegriff von Anspruch 1, eine Fahrradfelge mit einem solchen Fahrradventil und ein Verfahren zum Aufpumpen eines Luftreifens eines Fahrrads mit einem solchen Fahrradventil.

Ein Fahrradventil umfasst ein Rückschlagventil und ist am Luftschlauch einer Fahrradbereifung oder an der Felge des Laufrades eines Fahrrads angeschlossen. Das Fahrradventil dient dem Befüllen des Reifens, also des Schlauches der Fahrradbereifung, oder bei einem schlauchlosen Reifen unmittelbar des Reifens mit Luft. Prinzipiell kann auch eine Befüllung mit Gas statt Luft erfolgen. Vorliegend wird der Einfachheit halber stets von Luft gesprochen, dabei soll auch Gas durch den Begriff Luft mit umfasst sein.

Grundsätzlich gibt es drei Grundtypen von Ventilen, die bei Fahrradbereifungen verwendet werden. Deren jeweilige Bezeichnung geht auf die ursprünglichen Hersteller/Erfinder zurück. Die Verbreitung der einzelnen Typen variiert je nach Land, Fahrradtyp und Fahrradalter. Zwei dieser Typen sind "echte" Fahrradventile, der dritte Typ ist ein Autoventil, das auch bei Fahrradbereifungen verwendet wird.

Wenn bei der Beschreibung der vorliegenden Erfindung der Begriff Fahrradventil verwendet wird, so ist das Autoventil nicht mitumfasst. Ein solches Autoventil unterscheidet sich von Fahrradventilen gemäß der vorliegenden Erfindung dadurch, dass es am Lufteinlassende denselben Außendurchmesser wie am Luftauslassende aufweist, insbesondere mit einem durchgängigen Außengewinde vom Luftauslassende bis zum Lufteinlassende, beispielsweise VG 8.

Das Fahrradventil der vorliegenden Erfindung betrifft insbesondere zwei Typen von Fahrradventilen, nämlich das sogenannte Dunlop-Ventil, das auch als klassisches Ventil, Normalventil, Schlauchventil, Woodsventil, deutsches Ventil, englisches Ventil oder Hollandventil bezeichnet wird, sowie in der modernen Form als Blitzventil, Automatikventil, Patentventil und Alligatorventil. Eine entsprechende Felgenbohrung für ein solches Ventil weist in der Regel einen Durchmesser von 8,5 mm auf, der Ventilschaft einen Außendurchmesser von im Wesentlichen 8 mm, insbesondere zwischen 7,620 mm und 7,747 mm, beispielsweise mit einem Außengewinde VG 8x32.

Der zweite Typ, das Sclaverand-Ventil wird auch als französisches Ventil, Prestaventil, Rennradventil oder Schlauchreifenventil bezeichnet. Es ist häufig für Felgen mit einer Ventilbohrung vorgesehen, die einen Durchmesser von 6,5 mm aufweist. Der Ventilschaft weist häufig einen Außendurchmesser von im Wesentlichen 6 mm auf, insbesondere zwischen 5,930 mm und 6,030 mm. Am Lufteinlassende des Ventilschafts am Ventileinsatz ist in der Regel ein Außendurchmesser von im Wesentlichen 5,2 mm vorgesehen, insbesondere zwischen 5,180 mm und 2,280 mm. Typischerweise wird am Schaft ein Gewinde VG 6x32 und am Ventileinsatz ein Gewinde VG 5,2x24 vorgesehen.

Der dritte Typ von Ventil, der auch bei Fahrradbereifungen verwendet wird und nicht unter die Definition des Fahrradventils gemäß der vorliegenden Erfindung fällt, ist das Schraderventil, das auch als Autoventil, Kfz-Ventil, Motorradventil, MTB-Ventil oder amerikanisches Ventil bezeichnet wird. Auf ein solches Ventil kann der Pumpenkopf für Autoventile aufgesetzt werden, wodurch die Befüllung des Reifens beziehungsweise des Schlauches leicht mit entsprechenden Kfz-Reifen-Befüllvorrichtungen an jeder Tankstelle möglich ist.

Während für die ersten beiden genannten Ventiltypen in der Regel Handpumpen zum Einsatz kommen, die mit Muskelkraft betrieben werden, erfolgt das Befüllen von Autoventilen an Kraftfahrzeugreifen in der Regel automatisiert mit einem motorbetriebenen Kompressor. Um solche motorbetriebenen Kompressorbefüllvorrichtungen auch bei Fahrradventilen nutzen zu können, sind daher separat zum Fahrradventil erhältliche Adapter verfügbar, die nach Entfernen der Ventilkappe vom Dunlop- oder Sclaverand-Ventil auf das Gewinde für die Ventilkappe am Lufteinlassende auf den Ventilschaft aufgeschraubt werden. Diese Adapter weisen eine radial äußere Oberfläche zum Aufsetzen eines Pumpenkopfes für Autoventile auf, also eines Pumpenkopfes, der einen Innendurchmesser aufweist, der mit dem Außendurchmesser eines Schraderventils korrespondiert.

Nachteilig bei den bekannten Ventiladaptern ist, dass diese zusätzlich zum Ventil mitgeführt werden müssen, was die Gefahr eines Vergessens oder Verlierens bedingt.

DE 10 2018 006 979 A1 schlägt daher vor, einen solchen Ventiladapter beziehungsweise mehrere Adapter an einem Schlüsselanhänger vorzusehen.

Ferner sind Ventiladapter für Fahrradventile bekannt, die eine Messung des Luftdrucks ermöglichen, siehe beispielsweise DE 100 29 083 A1 und DE 20 2011 104 023 U1.

WO 2020/215015 A1 beschreibt ein Befüllsystem für schlauchlose Fahrradreifen mit einer Ventilmutter, die auf einen Ventilschaft aufgeschraubt wird, um den Ventilschaft an einer als Hohlprofil ausgeführten Fahrradfelge zu verspannen, indem die Fahrradfelge zwischen der Ventilmutter, die mit einem Dichtring auf die Fahrradfelge aufgesetzt wird, und einem Konterelement, das durch Aufweitung des Ventilschafts am Luftauslassende gebildet wird, eingeklemmt wird. Die Ventilmutter ist auf ein Außengewinde des Ventilschafts aufgeschraubt. Lufteinlassseitig schließt sich ein gewindeloser Abschnitt des Ventilschafts an, sodass die Ventilmutter nicht bis zum lufteinlassseitigen Ende des Ventilschafts auf dem Außengewinde bewegt werden kann.

US 2024/0183457 A1 offenbart eine Ventilbaugruppe mit einem Ventilschaft, der ein mit einem Außengewinde versehenen Außendurchmesser aufweist, an den sich ein gewindefreier Abschnitt mit vergleichsweise reduziertem Außendurchmesser anschließt, der als Schnellbefüllschnittstelle dient. Auf den mit dem Gewinde versehenen Außendurchmesser wird eine Füllkappe mit einem herkömmlichen Ventilkern aufgeschraubt. Im Ventilschaft ist ein vergleichsweise größeres Rückschlagventil angeordnet. Somit kann die Füllkappe vom Ventilschaft abgeschraubt werden, um nur über das vergleichsweise größere Rückschlagventil den Luftreifen des Kraftfahrzeugs schneller zu befüllen, beispielsweise vor der Erstauslieferung. Der Ventilschaft ist an einen Reifendrucksensor angeschlossen. Die Füllkappe kann nicht als Ventilmutter zum Verklemmen des Ventilschafts an der Fahrzeugfelge verwendet werden. Hierfür ist eine separate auf den Ventilschaft hinter der Füllkappe aufgeschraubten Ventilmutter vorgesehen.

Der vorliegenden Erfindung liegt die Aufgabe zugrunde, ein Fahrradventil anzugeben, auf das sowohl ein herkömmlicher Pumpenkopf für Fahrradventile, insbesondere für ein Dunlop-Ventil oder Sclaverand-Ventil, zum Aufpumpen des Fahrradreifens aufgesetzt werden kann, als auch ein Pumpenkopf für Autoventile, sodass der Fahrradreifen über das Ventil beispielsweise an einer Tankstelle mit dort installierten Reifenbefüllvorrichtungen aufgepumpt werden kann, ohne dass ein zusätzlicher Adapter notwendig ist.

Die erfindungsgemäße Aufgabe wird durch ein Fahrradventil mit den Merkmalen des Anspruchs 1 und ein Verfahren zum Aufpumpen eines Luftreifens eines Fahrrads mit einem solchen Fahrradventil mit den Merkmalen des Anspruchs 14 gelöst. Die abhängigen Ansprüche geben vorteilhafte und besonders zweckmäßige Ausgestaltungen der Erfindung, sowie eine Fahrradfelge mit einem erfindungsgemäßen Fahrradventil an.

Ein erfindungsgemäßes Fahrradventil umfasst einen Ventilschaft, ein im Ventilschaft angeordnetes Rückschlagventil und eine Ventilmutter. Der Ventilschaft weist einen ersten Abschnitt mit einem Luftauslassende und mit einem Außengewinde auf und einen an den ersten Abschnitt angrenzenden zweiten Abschnitt mit einem Lufteinlassende und einem gegenüber dem ersten Abschnitt reduzierten Außendurchmesser. Somit kann auf den ersten Abschnitt im Bereich des reduzierten Außendurchmessers beispielsweise eine Ventilkappe aufgeschraubt werden. Der zweite Abschnitt kann auch einen Ventileinsatz, insbesondere mit einem Außengewinde, umfassen oder durch diesen gebildet werden, beispielsweise bei einem Sclaverand-Ventil.

Das Rückschlagventil lässt entsprechend Druckluft vom Lufteinlassende zum Luftauslassende des Ventilschafts strömen, weil es durch die Druckdifferenz zwischen Ventileinlass und Ventilauslass in Richtung des Luftauslassendes aufgedrückt wird, und verhindert eine Luftströmung in die entgegengesetzte Richtung, sofern es nicht mechanisch betätigt wird, um den Luftdurchlass im Ventilschaft freizugeben. Das Rückschlagventil ist insbesondere frei von einer Ventilfeder und wird nur durch die Druckdifferenz zwischen dem Luftauslassende und dem Lufteinlassende in seine Schließstellung gedrückt.

Der Ventilschaft weist am Luftauslassende ein Konterelement mit einem gegenüber dem ersten Abschnitt vergrößerten Konteraußendurchmesser auf oder trägt ein solches Konterelement. Somit kann das Konterelement entweder unmittelbar durch den Ventilschaft gebildet werden, beispielsweise durch eine Aufweitung desselben am Luftauslassende, oder durch ein separates Element, das am Luftauslassende am Ventilschaft befestigt ist.

Die Ventilmutter umfasst einen Gewindeabschnitt mit einem auf das Außengewinde des ersten Abschnitts des Ventilschafts geschraubten Innengewinde, wobei die Ventilmutter durch Festschrauben und Losschrauben auf dem Außengewinde zwischen einer dem Lufteinlassende vergleichsweise fernen ersten Spannposition und einer dem Lufteinlassende vergleichsweise nahen zweiten Adapterposition drehverschiebbar ist. Die Ventilmutter kann somit mit ihrem Innengewinde auf dem Außengewinde des Ventilschafts in Richtung des Luftauslassendes geschraubt werden und nähert sich dabei der ersten Spannposition und nimmt diese bei fortgesetztem Schrauben schließlich ein, oder sie wird in Richtung des Lufteinlassendes geschraubt und nähert sich dabei der Adapterposition und nimmt diese bei fortgesetztem Schrauben schließlich ein.

Die Ventilmutter weist benachbart zum Gewindeabschnitt endseitig eine zum Luftauslassende gewandte Spannstirnfläche auf, deren Abstand zum Konterelement durch Verbringen der Ventilmutter aus der zweiten Adapterposition in die erste Spannposition reduzierbar ist, um eine Fahrradfelge in der ersten Spannposition der Ventilmutter zwischen der Spannstirnfläche und dem Konterelement einzuklemmen. Die Spannstirnfläche ist somit derart angeordnet und wirkt gemeinsam mit der Drehverschiebbarkeit aufgrund des Gewindeeingriffs zwischen der Ventilmutter und dem Ventilschaft zusammen, um unmittelbar oder mittelbar in der ersten Spannposition der Ventilmutter an der Fahrradfelge anzuliegen und den Ventilschaft mit dem Konterelement auf der radialen Innenseite der Fahrradfelge an die Fahrradfelge anzudrücken.

Erfindungsgemäß weist die Ventilmutter ferner einen Gewindeabschnitt mit einem auf das Außengewinde geschraubten Innengewinde, sowie einen sich unmittelbar oder mittelbar an den Gewindeabschnitt anschließenden Adapterabschnitt auf. Der Adapterabschnitt weist eine radial äußere Oberfläche zum Aufsetzen eines Pumpenkopfes für Autoventile in der zweiten Adapterposition der Ventilmutter auf. Dadurch ist es möglich, die Ventilmutter, die einerseits zum Verspannen des Fahrradventils beziehungsweise des Ventilschafts an der Fahrradfelge dient, aus ihrer das Fahrradventil verspannenden Position, der sogenannten ersten Spannposition, in Richtung zum Lufteinlassende des Ventilschafts in die sogenannte zweite Adapterposition der Ventilmutter zu schrauben und dadurch den Adapterabschnitt so weit in Richtung des Lufteinlassendes des Ventilschafts zu bewegen, dass auf den Adapterabschnitt der Pumpenkopf für das Autoventil aufgesetzt werden kann und der Fahrradreifen mit dem Pumpenkopf für das Autoventil aufgepumpt werden kann. Nach dem Aufpumpvorgang kann dann die Ventilmutter wieder in Richtung des Luftauslassendes des Ventilschafts bis in die Position geschraubt werden, in welcher sie den Ventilschaft an der Fahrradfelge verspannt.

Wenn hingegen das Fahrradventil zum Aufpumpen eines Fahrradreifens mit einer Luftpumpe mit einem herkömmlichen Pumpenkopf für Fahrradventile, das heißt insbesondere für ein Dunlop- oder Sclaverand-Ventil, verwendet werden soll, so kann die Ventilmutter in ihrem Sitz im Bereich des Luftauslassendes des Ventilschafts, das heißt im verspannten Zustand mit der Fahrradfelge, also in der ersten Spannposition, verbleiben und der Pumpenkopf, wie herkömmlich, am Lufteinlassende des Ventilschafts im Bereich des reduzierten Außendurchmessers des zweiten Abschnitts zumindest im Wesentlichen abdichtend aufgesetzt werden.

Das erfindungsgemäße Fahrradventil ist demnach ein Nichtautoventil, das aber mit einer Befüllvorrichtung mit einem Autoventilpumpenkopf zum Befüllen eines Fahrradreifens beziehungsweise Fahrradreifenschlauches verwendet werden kann. Ein und dasselbe Ventil kann mit zwei verschiedenen Pumpenköpfen, die sich durch ihren Innendurchmesser, der auf das Lufteinlassende aufgesetzt wird, voneinander unterscheiden, verwendet werden, um den Reifen/Schlauch mit Druckluft aufzupumpen. Der Autoventilpumpenkopf weist insbesondere einen entsprechenden Innendurchmesser auf, der so groß ist, dass er nicht abdichtend direkt auf den zweiten Abschnitt des Ventilschafts mit reduziertem Außendurchmesser am Lufteinlassende aufgesetzt werden kann.

Bevorzugt weist der Adapterabschnitt einen Innendurchmesser auf, der gleich ist wie oder größer ist als ein Innendurchmesser des Gewindeabschnitts. Dadurch kann der Adapterabschnitt beim Verschrauben der Ventilmutter in Richtung des Luftauslassendes in die erste Spannposition bis auf oder über das Außengewinde des ersten Abschnitts des Ventilschafts geschraubt werden.

Die Ventilmutter kann vorteilhaft mit dem Innengewinde so weit auf dem Außengewinde des ersten Abschnitts des Ventilschafts drehverschoben werden, dass der Adapterabschnitt zumindest im Wesentlichen bündig mit dem Lufteinlassende des Ventilschafts abschließt oder über dieses hinaussteht. Damit wird sicher vermieden, dass der Ventilschaft so weit aus der Ventilmutter heraussteht, dass er das Aufsetzen des Autoventilpumpenkopfes auf den Adapterabschnitt der Ventilmutter behindert oder blockiert.

Gemäß einer bevorzugten Ausführungsform ist das Innengewinde entsprechend im Gewindeabschnitt und auch im Adapterabschnitt ausgeführt, sodass beide Abschnitte auf das Außengewinde des Ventilschafts im ersten Abschnitt geschraubt werden können.

Günstig ist, wenn der Adapterabschnitt eine axiale Länge aufweist, die gleich ist wie oder größer ist als eine axiale Länge des zweiten Abschnitts des Ventilschafts. Dadurch kann der Gewindeabschnitt der Ventilmutter in der zweiten Adapterposition der Ventilmutter vollständig auf dem Außengewinde des ersten Abschnitts des Ventilschafts verschraubt bleiben und der Adapterabschnitt den ersten Abschnitt des Ventilschafts in der Radialrichtung vollständig überdecken, sodass das Aufsetzen des Pumpenkopfes für Autoventile besonders leicht möglich ist, ohne dass der Ventilschaft mit dem Lufteinlassende über die Ventilmutter axial hervorsteht.

Bevorzugt weist der zweite Abschnitt des Ventilschafts ein zweites Außengewinde auf, auf welches eine Ventilkappe aufgeschraubt oder aufschraubbar ist.

Da Pumpenköpfe für Autoventile in der Regel am Lufteinlassende gegen den Ventilschaft abdichten, dessen passender Außendurchmesser nun durch den Adapterabschnitt der Ventilmutter zur Verfügung gestellt wird, ist bevorzugt im Bereich des Gewindeabschnitts der Ventilmutter eine Dichtung vorgesehen, mit welcher die Ventilmutter gegen den Ventilschaft abgedichtet wird, um einen Druckluftaustritt zwischen Ventilmutter und Ventilschaft im Bereich des Außengewindes des Ventilschafts im ersten Abschnitt zu vermeiden. Beispielsweise ist ein Dichtring im Gewindeabschnitt vorgesehen.

Bevorzugt weist die radial äußere Oberfläche des Adapterabschnitts eine oder mehrere Umfangsrillen auf, damit der Pumpenkopf für Autoventile dort eingreifen kann. Solche Umfangsrillen können sich jeweils innerhalb einer Ebene senkrecht zur Längsachse des Ventilschafts erstrecken oder auch eine oder mehrere spiralförmige Umfangsrillen umfassen.

Gemäß einer bevorzugten Ausführungsform ist das Fahrradventil als Sclaverand-Ventil ausgeführt. Eine andere bevorzugte Ausführungsform sieht vor, dass das Fahrradventil als Dunlop-Ventil ausgeführt ist.

Damit der Pumpenkopf für Autoventile auf den Adapterabschnitt aufgesetzt werden kann, weist die radial äußere Oberfläche des Adapterabschnitts bevorzugt einen Außendurchmesser eines Schraderventils, insbesondere von im Wesentlichen 8 mm auf, zum Beispiel zwischen 7,620 mm und 7,747 mm. Beispielsweise kann der Adapterabschnitt auch mit einem Außengewinde VG 8x32 ausgeführt sein.

Eine erfindungsgemäße Fahrradfelge weist eine Ventilbohrung auf, beispielsweise mit einem Durchmesser von maximal 8 mm oder maximal 8,5 mm, in die ein erfindungsgemäßes Fahrradventil eingesetzt ist, das mit der Spannstirnfläche der Ventilmutter unmittelbar oder mittelbar gegen die Fahrradfelge verspannt oder verspannbar ist. Dabei wird die Fahrradfelge vorteilhaft zumindest mittelbar zwischen der Spannstirnfläche der Ventilmutter und dem Konterelement am Luftauslassende des Ventilschafts eingeklemmt.

Gemäß einem erfindungsgemäßen Verfahren zum Aufpumpen eines Luftreifens eines Fahrrads mit einem erfindungsgemäßen Fahrradventil wird wahlweise entweder in der ersten Spannposition der Ventilmutter ein Pumpenkopf für ein Fahrradventil mit vergleichsweise kleinerem Innendurchmesser, insbesondere Dunlop-Ventil oder Sclaverand-Ventil, auf den zweiten Abschnitt mit reduziertem Durchmesser des Ventilschafts aufgesetzt, oder die Ventilmutter in die zweite Adapterposition verbracht und ein Pumpenkopf für ein Autoventil mit vergleichsweise größerem Innendurchmesser, insbesondere Schraderventil, auf die radial äußere Oberfläche des Adapterabschnitts aufgesetzt.

In beiden Fällen wird anschließend der Luftreifen durch Einleiten von Druckluft in das Lufteinlassende aufgepumpt, wobei die Druckluft über das Luftauslassende in den Luftreifen entweicht. Das Verschrauben der Ventilmutter auf dem Außengewinde des ersten Abschnitts in Richtung des Lufteinlassendes, um diese in die zweite Adapterposition zu bewegen, kann soweit erfolgen, bis die Ventilmutter, insbesondere deren Adapterabschnitt, den zweiten Abschnitt des Ventilschafts am Lufteinlassende zumindest im Wesentlichen vollständig radial überdeckt.

Die Erfindung soll nachfolgend anhand eines Ausführungsbeispiels und den Figuren exemplarisch erläutert werden.

### Es zeigen:

- Figur 1: ein erfindungsgemäßes Fahrradventil mit gegen die Fahrradfelge verspannter Ventilmutter;
- Figur 2: das Fahrradventil aus der Figur 1 mit der Ventilmutter in der Position zum abdichtenden Aufsetzen eines Pumpenkopfes für Autoventile, um den Fahrradreifen aufzupumpen.

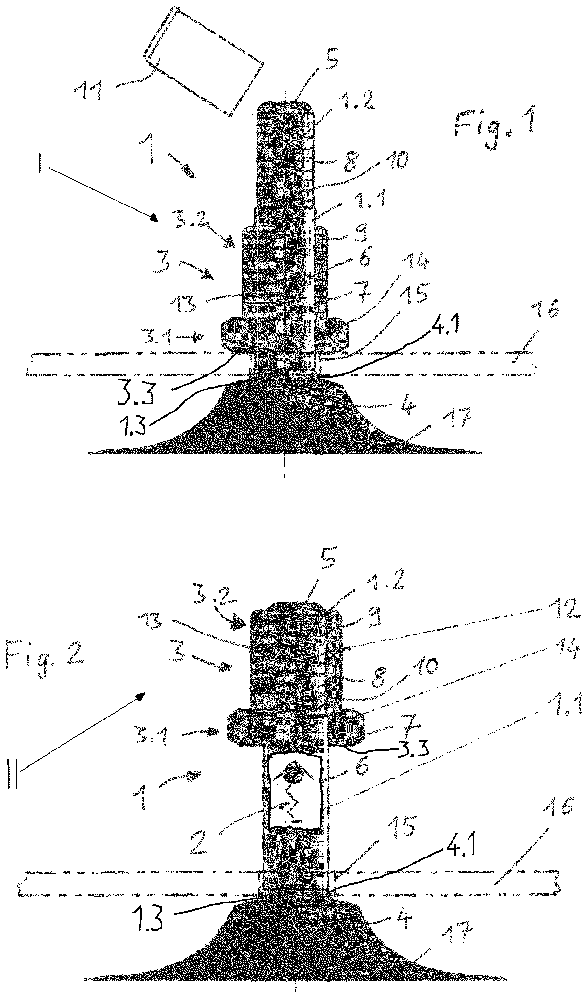

In den Figuren 1 und 2 ist ein in eine Ventilbohrung 15 einer Fahrradfelge 16 eingesetztes Fahrradventil mit einem Ventilschaft 1 gezeigt, der zwei Axialabschnitte aufweist, nämlich einen ersten Abschnitt 1.1 mit einem Luftauslassende 4 und einen zweiten Abschnitt 1.2 mit einem Lufteinlassende 5. Mit seinem Luftauslassende 4 ist der Ventilschaft 1 an einem Fahrradschlauch 17 derart luftdicht angeschlossen, insbesondere anvulkanisiert, dass der Fahrradschlauch 17 über das Fahrradventil mit Druckluft aufgepumpt werden kann.

Bei dem in der Figur 1 dargestellten Zustand des Fahrradventils ist der Ventilschaft 1 mittels der Ventilmutter 3, die auf ein Außengewinde 6 des ersten Abschnitts 1.1 aufgeschraubt ist, gegen die Fahrradfelge 16 verspannt. Dadurch wird der zweite Abschnitt 1.2 radial außen freigegeben, sodass hier eine schematisch dargestellte Ventilkappe 11 aufgeschraubt werden kann, um das Lufteinlassende 5 zu überdecken, oder ein Pumpenkopf für ein Fahrradventil (nicht dargestellt) aufgesetzt werden kann, der einen mit dem gegenüber dem ersten Abschnitt 1.1 reduzierten Außendurchmesser 8 des zweiten Abschnitts 1.2 korrespondiert, um zumindest im Wesentlichen druckdicht gegen den zweiten Abschnitt 1.2, das heißt den Außendurchmesser 8 und/oder das Lufteinlassende 5 abzudichten und so den Fahrradschlauch 17 aufpumpen zu können. Diese Position der Ventilmutter 3 auf dem Ventilschaft 1 wird vorliegend als erste Spannposition I bezeichnet. Die Fahrradfelge 16 ist zwischen einer dem Luftauslassende 4 zugewandten Spannstirnfläche 3.3 der Ventilmutter 3 und einem Konterelement 1.3 am Luftauslassende 4 des Ventilschafts 1 eingeklemmt. Da der Ventilschaft 1 luftdicht am Fahrradschlauch 17 angeschlossen ist, ist in dieser Klemmverbindung keine Dichtung erforderlich. Das Konterelement 1.3, das hier durch den Ventilschaft 1 selbst gebildet wird, weist einen gegenüber dem ersten Abschnitt 1.1 vergrößerten Konteraußendurchmesser 4.1 auf, der im gezeigten Ausführungsbeispiel, jedoch nicht zwingend, sich konisch zum Luftauslassende 4 erweitert.

Beim in der Figur 2 gezeigten Zustand des Fahrradventils ist die Ventilmutter 3 mit ihrem Innengewinde 7 eines Gewindeabschnitts 3.1 der Ventilmutter 3 soweit auf dem Außengewinde 6 des ersten Abschnitts 1.1 des Ventilschafts 1 in Richtung zum Lufteinlassende 5 verschraubt worden, dass der zweite Abschnitt 1.2 mit dem reduzierten Außendurchmesser 8 von einem sich an den Gewindeabschnitt 3.1 anschließenden Adapterabschnitt 3.2 der Ventilmutter 3 überdeckt wird, sodass auf die radial äußere Oberfläche 12 des Adapterabschnitts 3.2 ein Pumpenkopf für Autoventile aufgesetzt werden kann, um zumindest im Wesentlichen druckluftdicht gegen die Ventilmutter und/oder das Lufteinlassende 5 abzudichten. Diese Position der Ventilmutter 3 auf dem Ventilschaft 1 wird vorliegend als zweite Adapterposition II bezeichnet.

Der Adapterabschnitt 3.2 weist einen Innendurchmesser 9 auf, der gleich groß ist wie oder größer ist als der Innendurchmesser des Gewindeabschnitts 3.1. Beispielsweise ist das Innengewinde 7, mit dem die Ventilmutter 3 auf das Außengewinde 6 des Ventilschafts 1 aufgeschraubt ist, bis in den Adapterabschnitt 3.2 oder durch den gesamten Adapterabschnitt 3.2 ausgeführt.

Zum sicheren Halten des Pumpenkopfes für Autoventile kann der Adapterabschnitt 3.2 auf seiner radial äußeren Oberfläche 12 mit einer oder mehreren Umfangsrillen 13 versehen sein.

Zur Abdichtung der Ventilmutter 3 gegen das Außengewinde 6 ist im Adapterabschnitt 3.2 im Innengewinde 7 eine Dichtung 14 vorgesehen. Dies ist jedoch nicht zwingend notwendig.

Im Bereich des zweiten Abschnitts 1.2 weist der Ventilschaft 1 ein zweites Außengewinde 10 mit gegenüber dem Außengewinde 6 reduziertem Durchmesser auf, auf welches die Ventilkappe 11 aufgeschraubt werden kann oder der Pumpenkopf für Fahrradventile aufgesetzt werden kann.

Der Gewindeabschnitt 3.1 der Ventilmutter 3 weist im gezeigten Ausführungsbeispiel ein Außensechskant auf, über welchen er verschraubt werden kann. Alternativ könnte auch eine Rändelung vorgesehen sein. Andere Ausführungsformen, die ein Verdrehen der Ventilmutter 3 ermöglichen, sind ebenfalls möglich.

Ein innerhalb des Ventilschafts 1 angeordnetes Rückschlagventil 2 ist in der Figur 2 nur schematisch in einem Ausbruch des Ventilschafts 1 dargestellt. Dieses lässt Druckluft in Richtung vom Lufteinlassende 5 zum Luftauslassende 4 durch und blockiert eine Rückströmung von Druckluft vom Luftauslassende 4 zum Lufteinlassende 5.

Erfindungsgemäß wird somit die Ventilmutter 3 nicht nur zum Verspannen des Ventilschafts 1 gegen die Fahrradfelge 16 verwendet, sondern gleichzeitig als Adapter zum Aufsetzen des Pumpenkopfes für Autoventile auf das Fahrradventil, sodass dieser Adapter stets als Bestandteil des Fahrradventils mitgeführt wird.

Die Erfindung ist auch bei einem Fahrradventil zum Aufpumpen eines schlauchlosen Fahrradreifens anwendbar, bei dem das Luftauslassende 4 frei im Reifenhohlraum mündet.

### Bezugszeichenliste

- 1: Ventilschaft
- 1.1: erster Abschnitt
- 1.2: zweiter Abschnitt
- 1.3: Konterelement
- 2: Rückschlagventil
- 3: Ventilmutter
- 3.1: Gewindeabschnitt
- 3.2: Adapterabschnitt
- 3.3: Spannstirnfläche
- 4: Luftauslassende
- 4.1: Konteraußendurchmesser
- 5: Lufteinlassende
- 6: Außengewinde
- 7: Innengewinde
- 8: Außendurchmesser
- 9: Innendurchmesser
- 10: zweites Außengewinde
- 11: Ventilkappe
- 12: radial äußere Oberfläche
- 13: Umfangsrille
- 14: Dichtung
- 15: Ventilbohrung
- 16: Fahrradfelge
- 17: Fahrradschlauch
- I: Spannposition
- II: Adapterposition

## Patentansprüche

1. Fahrradventil
mit einem Ventilschaft (1), einem im Ventilschaft (1) angeordneten Rückschlagventil (2) und einer Ventilmutter (3), wobei der Ventilschaft (1) einen ersten Abschnitt (1.1) mit einem Luftauslassende (4) und mit einem Außengewinde (6) umfasst und einen an den ersten Abschnitt (1.1) angrenzenden zweiten Abschnitt (1.2) mit einem Lufteinlassende (5) und einem gegenüber dem ersten Abschnitt (1.1) reduzierten Außendurchmesser (8) aufweist;
der Ventilschaft (1) am Luftauslassende (4) ein Konterelement (1.3) mit einem gegenüber dem ersten Abschnitt (1.1) vergrößerten Konteraußendurchmesser (4.1) aufweist oder trägt;
die Ventilmutter (3) einen Gewindeabschnitt (3.1) mit einem auf das Außengewinde (6) des ersten Abschnitts (1) des Ventilschafts (1) geschraubten Innengewinde (7) aufweist, wobei die Ventilmutter (3) durch Festschrauben und Losschrauben auf dem Außengewinde (6) zwischen einer dem Lufteinlassende (5) vergleichsweise fernen ersten Spannposition (I) und einer dem Lufteinlassende (5) vergleichsweise nahen zweiten Adapterposition (II) drehverschiebbar ist;
die Ventilmutter (3) benachbart zum Gewindeabschnitt (3.1) endseitig eine zum Luftauslassende (4) gewandte Spannstirnfläche (3.3) aufweist, deren Abstand zum Konterelement (1.3) durch Verbringen der Ventilmutter (3) aus der zweiten Adapterposition (II) in die erste Spannposition (I) reduzierbar ist, um eine Fahrradfelge (16) in der ersten Spannposition (I) der Ventilmutter (3) zwischen der Spannstirnfläche (3.3) und dem Konterelement (1.3) einzuklemmen;
**dadurch gekennzeichnet, dass**
die Ventilmutter (3) einen sich unmittelbar oder mittelbar an den Gewindeabschnitt (3.1) anschließenden Adapterabschnitt (3.2) umfasst, der eine radial äußere Oberfläche (12) zum Aufsetzen eines Pumpenkopfes für Autoventile in der zweiten Adapterposition (II) der Ventilmutter (3) aufweist.

2. Fahrradventil gemäß Anspruch 1, wobei die Ventilmutter (3) mit dem Innengewinde (7) so weit auf dem Außengewinde (6) des ersten Abschnitts (1) des Ventilschafts (1) drehverschoben werden kann, dass der Adapterabschnitt (3.2) zumindest im Wesentlichen bündig mit dem Lufteinlassende (5) des Ventilschafts (1) abschließt oder über dieses hinaussteht.

3. Fahrradventil gemäß Anspruch 1 oder 2, wobei der Adapterabschnitt (3.2) einen Innendurchmesser (9) aufweist, der gleich wie oder größer als ein Innendurchmesser des Gewindeabschnitts (3.1) ist.

4. Fahrradventil gemäß Anspruch 3, wobei das Innengewinde (7) im Gewindeabschnitt (3.1) und im Adapterabschnitt (3.2) ausgeführt ist.

5. Fahrradventil gemäß einem der Ansprüche 1 bis 4, wobei der Adapterabschnitt (3.2) eine axiale Länge aufweist, die gleich ist wie oder größer als eine axiale Länge des zweiten Abschnitts (1.2) des Ventilschafts (1).

6. Fahrradventil gemäß einem der Ansprüche 1 bis 5, wobei der zweite Abschnitt (1.2) des Ventilschafts (1) ein zweites Außengewinde (10) aufweist, auf welches eine Ventilkappe (11) aufgeschraubt oder aufschraubbar ist.

7. Fahrradventil gemäß einem der Ansprüche 1 bis 6, wobei die Ventilmutter (3) im Bereich des Gewindeabschnitts (3.1) mit einer Dichtung (14) zum Abdichten der Ventilmutter (3) gegen den Ventilschaft (1) versehen ist.

8. Fahrradventil gemäß einem der Ansprüche 1 bis 7, wobei die radial äußere Oberfläche (12) eine oder mehrere Umfangsrillen (13) aufweist.

9. Fahrradventil gemäß einem der Ansprüche 1 bis 8, wobei das Fahrradventil als Sclaverand-Ventil ausgeführt ist.

10. Fahrradventil gemäß einem der Ansprüche 1 bis 8, wobei das Fahrradventil als Dunlop-Ventil ausgeführt ist.

11. Fahrradventil gemäß einem der Ansprüche 1 bis 10, wobei die radial äußere Oberfläche (12) einen Außendurchmesser eines Schraderventils aufweist.

12. Fahrradventil gemäß einem der Ansprüche 1 bis 11, wobei die radial äußere Oberfläche (12) einen Außendurchmesser von 7,5 mm bis 8 mm, insbesondere von 7,7 mm bis 8 mm aufweist.

13. Fahrradfelge (16) mit einer Ventilbohrung (15), in die ein Fahrradventil gemäß einem der Ansprüche 1 bis 12 eingesetzt ist, das unmittelbar oder mittelbar mit der Spannstirnfläche (3.3) der Ventilmutter (3) und dem Konterelement (1.3) gegen die Fahrradfelge (16) verspannt oder verspannbar ist.

14. Verfahren zum Aufpumpen eines Luftreifens eines Fahrrads mit einem Fahrradventil gemäß einem der Ansprüche 1 bis 12,
**dadurch gekennzeichnet, dass**
wahlweise entweder in der ersten Spannposition (I) der Ventilmutter (3) ein Pumpenkopf für Fahrradventile mit vergleichsweise kleinerem Innendurchmesser auf den zweiten Abschnitt (1.2) mit reduziertem Außendurchmesser (8) aufgesetzt wird,
oder die Ventilmutter (3) in die zweite Adapterposition (II) verbracht wird und ein Pumpenkopf für ein Autoventil mit vergleichsweise größerem Innendurchmesser auf die radial äußere Oberfläche (12) des Adapterabschnitts (3.2) aufgesetzt wird, und
jeweils anschließend der Luftreifen durch Einleiten von Druckluft, welche über das Luftauslassende (4) in den Luftreifen entweicht, in das Lufteinlassende (5) aufgepumpt wird.
